# EUROPEAN PATENT APPLICATION

(11) **EP 1 585 236 A1**
(43) Date of publication of application: **12.10.2005**
(21) Application number: 04290972.1
(22) Date of filing: 08.04.2004
(51) Int. Cl.: H04B 10/17, G02B 6/16

(54) **Optical amplification system**

(71) Applicant: ALCATEL, 75008 Paris (FR)
(72) Inventor: Simonneau, Christian, 92160 Antony (FR); Riant, Isabelle, 91400 Orsay (FR); Bonnet, Xavier, 78470 St Remy Les Chevreuse (FR); Girardon, Valérie, 91220 Bretigny/orge (FR); Guerin,Jean-Jacques, 92160 Antony (FR); Labidi, Hedi, 75017 Paris (FR)
(74) Representative: Schäfer, Wolfgang

(57) **Abstract**

An optical amplification system is described which comprises an optical amplifier and an optical filter. The gain of the optical amplifier is changeable to different gain values. For every one of the gain values, a wavelength-dependent gain curve exists. At least for one of the gain values, the gain curve varies over the wavelength. An apodized long-period grating (LPG) is used as the optical filter. The apodized LPG provides at least one wavelength-dependent attenuation curve which compensates the gain curve varying over the wavelength.

## Description

The invention relates to an optical amplification system comprising an optical amplifier and an optical filter.

It is known that an optical amplifier like an erbium-doped fiber amplifier (EDFA) is designed to operate with a fixed flat gain. However, if the gain has to be changed e.g. due to a changing input power, the gain of the EDFA is not flat anymore but becomes a gain slope. In order to compensate this gain slope, it is also known to use a variable optical attenuator or a variable attenuation slope compensator as an optical filter.

US 2002/0109907 A1 discloses an optical amplifier and a dynamic slope compensation filter (DSCF) being coupled with an optical fiber. The DSCF is capable of correcting gain tilt of the optical amplifier. The DSCF is realized as a long-period grating (LPG) and the optical amplifier may be realized as an erbium-doped fiber amplifier (EDFA).

As described in US 2002/0109907 A1, it is possible to influence the loss provided by the DSCF by influencing the temperature of the DSCF. Insofar, it is possible to compensate the gain tilt of the optical amplifier at least partly. However, US 2002/0109907 A1 does not consider that the gain slope e.g. of an EDFA is a function of the wavelength. This has the consequence that the gain at the output of the EDFA is not flat but comprises gain variations over its bandwidth.

It is an object of the invention to provide an optical amplification system with a flat gain at its output.

This object is solved by an optical amplification system according to claim 1 or an optical transmission system according to claim 5.

The invention uses an apodized long-period grating (LPG) as a DSCF. This apodized LPG provides at least one wavelength-dependent slope attenuation curve that compensates the wavelength-dependent gain curve slope of the optical amplifier. Insofar, the dependency of the gain curve of the optical amplifier is considered by the optical filter, i.e. by the DSCF. Furthermore, if the gain curve of the optical amplifier changes e.g. as a function of the input power at the input of the optical amplifier, then the attenuation curve of the apodized LPG is influenced in the same way. This results in a flat gain over the whole amplification bandwidth of the optical amplification system for different input powers.

Further features, applications and advantages of the invention will become apparent from the following description of exemplary embodiments of the invention that are shown in the drawings. There, all described and shown features themselves or in any combination represent the subject matter of the invention, independently of their wording in the description or their representation in the drawings and independently of their combination in the claims or the dependencies of the claims.

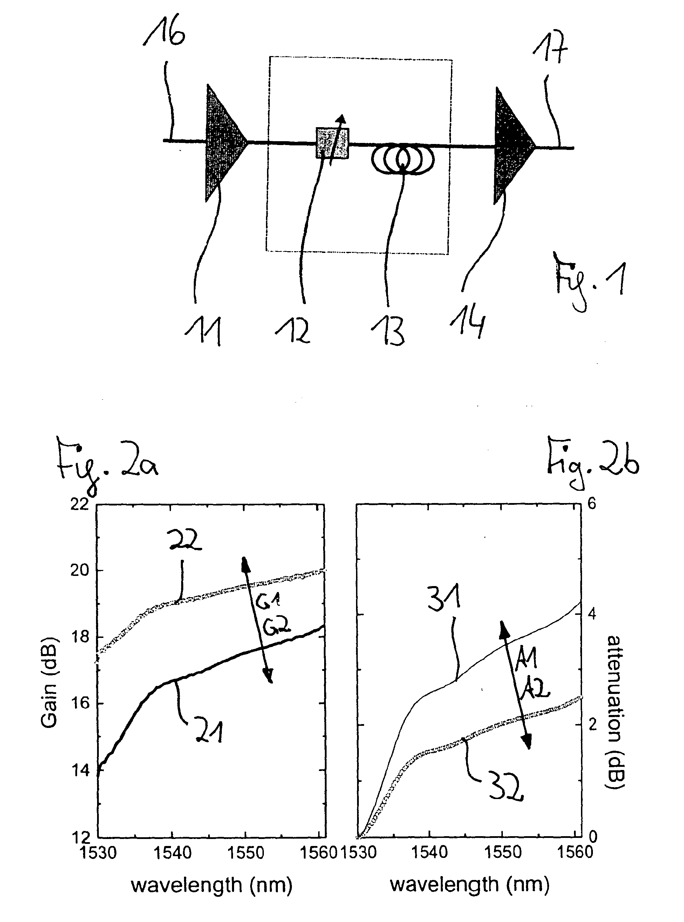

Figure 1 shows a schematic block diagram of an embodiment of an optical amplification system according to the invention, and figures 2a and 2b show schematic diagrams of signals in connection with the system of figure 1.

In figure 1, an optical amplification system 10 is shown that comprises a first stage 11 of an erbium-doped fiber amplifier (EDFA), a variable slope compensation filter (VSCF) 12, a dispersion compensating fiber (DCF) 13 and a second stage 14 of the afore-mentioned EDFA. The input of the first stage 11 of the EDFA is connected to an input fiber 16. The output of the first stage 11 is coupled to the series connection of the VSCF 12 and the DCF 13. The input of the second stage 14 of the EDFA is coupled to the afore-mentioned series connection. And the output of the second stage 14 is connected to an output fiber 17. In addition, flattening filters may be present in the first and the second stage 11, 14 of the EDFA for flattening the gain of the amplifier and operating the amplifier at a given gain.

The gain of the EDFA is changeable to different gain values. However, for one and the same selected gain value, the gain curve of the EDFA is not flat but varies over the wavelength and insofar constitutes a gain slope.

In figure 2a, the gain (in dB) of the EDFA of figure 1 is depicted over the wavelength (in nm).

A first gain curve 21 is shown which relates to a first input power of the signal provided to the first stage 11 of the EDFA. This first input power could be e.g. 0 dBm wherein a nominal input power could be e.g. - 5 dBm. A second gain curve 22 is shown in figure 2a that relates to a second input power, e.g. -2 dBm. The gain curves 21, 22, therefore, are a function of the input power of the signal provided to the first stage 11 of the EDFA.

The two gain curves 21, 22 correspond to two different gain values G1, G2 which the EDFA may supply. This is expressed by the double-arrow in figure 2a. Of course, the EDFA is able to provide more than two gain values.

As can be seen in figure 2a, the slopes of the gain curves 21, 22 of the EDFA are not straight but are changing as a function of the wavelength. Insofar, figure 2a represents two gain slopes of the EDFA of figure 1.

In figure 2b, an attenuation (in dB) is depicted over the wavelength (in nm).

A first attenuation curve 31 is shown which relates to the above-mentioned first input power of the signal provided to the first stage 11 of the EDFA. A second attenuation curve 32 is shown in figure 2b that relates to the above-mentioned second input power.

The attenuation curves 31, 32 shown in figure 2b are provided by the VSCF 12. The two attenuation curves 21, 22 correspond to two different attenuation values A1, A2 which the VSCF 12 may provide. This is expressed by the double-arrow in figure 2b. Of course, the VSCF 12 is able to provide more than two attenuations.

If the signal at the first stage 11 of the EDFA is applied with the first input power, then the gain curve 21 of the EDFA is compensated by the attenuation curve 31 of the VSCF 12. The attenuation curve 31 is designed such that the resulting gain at the output of the second stage 14 of the EDFA is flat. The same is valid for the second input power. There, the gain curve 22 of the EDFA is compensated by the attenuation curve 32 resulting in a flat gain at the output of the second stage 14 of the EDFA.

In general, for any gain curve that the EDFA provides, the VSCF 12 provides a corresponding attenuation curve which compensates the gain curve such that a flat gain is present at the output of the EDFA.

As described, the different attenuation curves 31, 32 are valid for different input powers of the signal applied to the first stage 11 of the EDFA. These different input powers are known or may be evaluated. Insofar, it is possible to adjust the VSCF 12 to the actual input power. As a result, the attenuation values A1, A2 of the VSCF 12 are adjusted as a function of the input power provided to the EDFA.

According to the invention, the VSCF 12 is realized by an apodized long-period grating (LPG).

In order to manufacture this apodized LPG, the course of at least one of the attenuation curves 31, 32 of figure 2b, i.e. the dependencies of the attenuations 31, 32 of the wavelength, has to be evaluated in a first step. This can be done by measuring the slope gain of the EDFA at a specific input power at the input of the first stage 11 of the EDFA and then by calculating that corresponding attenuation curve which would lead to a flat gain at the output of the second stage 14 of the EDFA. The result is a required course of an attenuation curve.

In a second step, a required apodization of the LPG is evaluated. This can be done by mathematical algorithms which take into account the evaluated course of an attenuation curve and the physical entities of the LPG and the apodization of the LPG. The result is a definition of the physical values of the required apodized LPG.

Then, a single apodized LPG is manufactured according to the evaluated physical values. The resulting apodized LPG provides an attenuation curve according to one of the attenuation curves 31, 32 of figure 2b.

This apodized LPG is then used as the VSCF 12 of figure 1. The variability of the VSCF 12, i.e. the change of the attenuation values A1, A2 of the VSCF 12 depending on the input power at the input of the first stage 11 of the EDFA, can be realized in different ways.

It is possible, to change the attenuation value of the apodized LPG with the help of the temperature of the LPG, e.g. as described in US 2002/0109907 A1. As well, it is possible to influence the attenuation value of the apodized LPG by providing a liquid of a given refractive index at one end of the LPG, e.g. as described in EP 1 355 290 A1. Furthermore, it is possible to mount a piezoelectric stack onto the apodized LPG and to apply a voltage to the stack such that the LPG is strained or compressed, e.g. as described in WO 01/37458 A1.

As described, the curves of figures 2a, 2b apply to an EDFA operating in the so-called C-band for input power variations being greater or equal than a nominal input power. However, the described invention may also be used in connection with input power variations which are smaller than the nominal input power and which lead to a different VSCF with a different wavelength-dependent shape. In this case, a LPG with a different apodization is used.

Furthermore, the described invention may also be used in other amplification bands, i.e. in the so-called L-band or S-band, or in connection with other ions, i.e. Thulium or Erbium-Ytterbium. As well, instead of any silica being used, it is possible to use fluoride or tellurite or the like.

## Claims

1. An optical amplification system comprising an optical amplifier and an optical filter, wherein the gain of the optical amplifier is changeable to different gain values (G1, G2), wherein for every one of the gain values (G1, G2), a wavelength-dependent gain curve (21, 22) exists, and wherein at least for one of the gain values (e.g. G1), the gain curve (e.g. 21) varies over the wavelength, **characterized in that** an apodized long-period grating (LPG) is used as the optical filter, wherein the apodized LPG provides at least one wavelength-dependent attenuation curve (e.g. 31) which compensates the gain curve (e.g. 21) varying over the wavelength.

2. The system of claim 1 **characterized in that** the apodized LPG is changeable to different attenuation values (A1, A2), wherein for every one of the attenuation values (A1, A2), a wavelength-dependent attenuation curve (31, 32) exists.

3. The system of claim 2 **characterized in that** the change of the attenuation values (A1, A2) is a function of the change of the gain values (G1, G2).

4. The system of claim 4 **characterized in that** the gain values (G1, G2) are a function of the input power provided to the input of the EDFA.

5. A transmission system for transmitting optical signals **characterized by** an optical amplification system according to claim 1.

6. A method of manufacturing an apodized long-period grating (LPG) for use in an optical amplification system according to claim 1 **characterized by** the steps of: the course of the attenuation curve (31) is evaluated, the values of the apodization of the LPG are evaluated according to the evaluated course, and the apodized LPG is manufactured according to the evaluated values.

7. The method of claim 6 wherein the course of the attenuation curve (31) is evaluated by measuring the slope gain of the optical amplifier at a specific input power at the input of the optical amplifier and then by calculating that corresponding attenuation curve (31) which would lead to a flat gain at the output of the optical amplifier.

8. The method of claim 6 wherein the values of the apodization of the LPG are evaluated by taking into account the evaluated course of an attenuation curve (31) and the physical entities of the LPG and the apodization of the LPG.
